# EUROPÄISCHE PATENTSCHRIFT

(11) **EP 2 607 292 B1**
(45) Veröffentlichungstag und Bekanntmachung des Hinweises auf die Patenterteilung: **17.12.2014**
(21) Anmeldenummer: 12198732.5
(22) Anmeldetag: 20.12.2012
(51) Int. Cl.: B66F 9/06, B65G 1/04

(54) **System zum Transport von auf Hilfsmitteln angeordneten Gütern**
Sytsem for the transport of goods arranged on auxiliary aids
Système de transport des marchandises disposées sur les aides auxiliaires

(30) Priorität: 23.12.2011 DE 102011089858
(43) Veröffentlichungstag der Anmeldung: 26.06.2013
(73) Patentinhaber: Krones AG, 93073 Neutraubling (DE)
(72) Erfinder: Sturm, Volker, 92442 Wackersdorf (DE)
(74) Vertreter: Grünecker, Kinkeldey, Stockmair & Schwanhäusser

(56) Entgegenhaltungen:
- WO-A1-2010/142688
- DE-A1- 4 120 923
- DE-A1- 10 221 603
- US-A1- 2007 288 123

## Beschreibung

Die vorliegende Erfindung betrifft ein System zum Transport von auf Ladehilfsmitteln angeordneten Gütern zwischen zwei Bereichen, wobei ein Bereich ein Hochregallager ist, umfassend ein fahrerloses Transportsystem mit wenigstens einem Transportfahrzeug zum Transport der Güter samt Ladehilfsmittel.

In automatisierten Warenlagern bzw. Warenverteilzentren ist es üblich, sogenannte "Hochregallager" zu verwenden, die als mehrstöckige Bauwerke ausgebildet sind. Für die Ein- und Auslagerung von Ladehilfsmitteln mit darauf angeordneten Gütern werden herkömmlicherweise flur gebundene Regalbediengeräte verwendet, die für Ein- und Auslagerung mit einem Fördersystem kombiniert werden. Hierbei ist das Fördersystem zumeist an die jeweiligen Bedürfnisse, beispielsweise Transportgutart oder Projekterfordernisse angepasst, so dass unterschiedliche Fördermaßnahmen ergriffen werden können. Beispielsweise können stationäre Förderer wie Rollenbahnen, Kettenförderer, Umlenkeinrichtungen oder schienengebundene Verteilwagen das Fördersystem bilden oder auch bewegliche Förderer wie Fahrerlose Transportsysteme (FTS), Elektrobodenbahnen (EBB) oder Elektrohängebahnen (EHB).

Von den "fahrerlosen" Transportsystemen gibt es unterschiedliche Ausprägungen. Häufig kommen fahrerlose Transportsystemen zum Einsatz, die ein Fahrzeug mit einem stationären Förderer kombinieren, der Transportgut auf einem Ladehilfsmittel in einer horizontalen Bewegung übernehmen kann. Weiterhin kommen Konter- bzw. Gegengewichtfahrzeuge zum Einsatz, die mit einer Hubvorrichtung wie Gabeln eines Staplers kombiniert werden und so Paletten Anheben, Tragen und Absenken können. Auch kommen Systeme zum Einsatz, die unter Transportgut auf einem Ladehilfsmittel fahren und dieses von einer Vorrichtung anheben, tragend transportieren und auf Vorrichtungen absetzen können. Der Hub kann dabei beispielhaft durch eine rotierende Spindel oder durch Hubsäulen, Excenter usw. erfolgen. DE 10221603 A1 offenbart ein Transportsystem mit einer Vielzahl von Hochregale und Transportfahrzeuge.

In einem herkömmlichen Warenlager erfolgt beispielsweise der Transport der Güter von der Auslagefördertechnik zum Versand über Palettenfördertechnik oder alternativ über eine Elektrohängebahn bzw. Elektrobodenbahn. Im Versandbereich werden die Güter üblicherweise mittels Querverschiebewagen auf Gefällerollbahnen zur Versandbereitstellung verteilt. Zusätzlich können bei Anlagen mit hoher Leistungsanforderung zur Sequenzierung der Güter im Versand im Arbeitsbereich der Querverschiebewagen angetriebene Förderelemente angebaut werden, auf denen die Güter temporär zwischengepuffert werden können, und wobei im Anschluss die Güter in der richtigen Reihenfolge abgezogen und auf die Versandgefällerollbahnen gefördert werden.

Alle konventionellen, stationären Förderlösungen weisen erhebliche Nachteile hinsichtlich der Flexibilität der Nutzungsauslastung auf und sind aufwendig in der Inbetriebnahme. Durch die Verwendung der konventionellen Fördertechnik sind immer wieder Palettenübergaben von einem Förderelement zu dem nächsten Förderelement notwendig. Jede dieser Übergaben stellt eine mögliche Störquelle dar. Gleichermaßen findet eine Beeinträchtigung der Förderleistung im Falle von Wartung oder Reparaturen statt.

Die beweglichen Förderer bieten mehr Flexibilität hinsichtlich Erweiterbarkeit, Fahrwegsänderung und der Fahrzeugverteilung, insbesondere die nicht schienengebundenen Fahrerlosen Transportsysteme. In vielen Logistiklösungen werden die beweglichen Förderer mit konventioneller Förderern kombiniert, insbesondere bei der Anbindung von automatischen Lagersystemen und so reduzieren sich die möglichen Vorteile anhand der beweglichen Förderer.

Aufgabe der vorliegenden Erfindung ist es daher, ein System mit fahrerlosen Transportsystemen zum Transport von auf Ladehilfsmitteln angeordneten Gütern, insbesondere im räumlichen Umfeld eines Hochregallagers, bereitzustellen, welches eine Beförderung der Güter zwischen dem Hochregallager und weiteren Bereichen ermöglicht, wobei das System eine hohe Flexibilität hinsichtlich Fahrzeugerweiterung, Fahrwegänderungen, Fahrzeugverteilung, aufweist und geringe Komplexität durch passive Übergabevorrichtungen keine Verkabelung sowie elektrische und steuerungstechnische Inbetriebnahme erfordert, was bei herkömmlichen Förderern oder schienengebundenen Systemen erforderlich ist.

Diese Aufgabe wird durch ein System zum Transport von auf Ladehilfsmitteln angeordneten Gütern zwischen zwei Bereichen, wobei ein Bereich ein Hochregallager ist, dadurch gelöst, dass das System ein fahrerloses Transportsystem mit wenigstens einem Transportfahrzeug zum Transport der Güter samt Ladehilfsmittel umfasst, wobei das Transportfahrzeug mit einer Hubeinrichtung ausgebildet ist, die oberhalb des Fahrzeuges anhebbar und absenkbar ist, und mit einer vom Transportfahrzeug unterfahrbaren Übergabestation von der das Transportfahrzeug dort abgesetzte Ladehilfsmittel mit Ladung übernehmen und/oder übergeben kann.

Im Gegensatz zu dem bisherigen Stand der Technik erfolgt der Transport der Güter folglich außerhalb dem Hochregallager im wesentlichen über Transportfahrzeuge, d.h. es kann vollständig auf die flurgebundene übliche Fördertechnik, wie Rollenförderer oder Kettenförderer, sowie auf schienengebundene Förderer wie Elektrohängebahn oder Elektrobodenbahn verzichtet werden.

Die Transportfahzeuge sind ausreichend, um das Ladehilfsmittel mit darauf angeordneten Gütern von einer Quelle oder Übergangsstation bis zu dem Hochregallager, d.h. bis zu dem Regalbediengerät zu befördern und darauf abzusetzen, oder von dem Hochregallager zu einer Übergabestation oder Ziel, so dass während des ganzen Transportes keine zusätzlichen Palettenübergabe notwendig sind. Hierdurch kann der Transport wesentlich verkürzt, und damit zeitund wegoptimal erfolgen.

Mit der Erfindung können auch komplexe, leistungsstarke Logistiksysteme mit einfachen Systemkomponenten mit hoher Verfügbarkeit, zu vergleichsweise geringen Investitionskosten, mit kurzen Inbetriebnahmezeiten, mit hoher Flexibilität für im Falle marktbedingt veränderter Leistungsanforderungen und mit niedrigen Betriebskosten durch Wegoptimierung und automatisierte, fahrerlose Fahrzeuge realisiert werden.

Da die erfindungsgemäßen Transportfahrzeuge mit einer Hubeinrichtung ausgebildet sind, die oberhalb des Fahrzeugs anhebbar und absenkbar ist, kann das Transportfahrzeug kompakt ausgestaltet werden. Da die Güter auf dem Fahrzeug, d.h. überhalb des Fahrzeuges, transportiert werden, wird eine sehr ausgewogene Lagerung der Güter auf dem Fahrzeug sichergestellt und es sind keine zusätzlichen Maßnahmen notwendig, um z.B. einem Verkippen des Fahrzeuges entgegenzuwirken.

Das erfindungsgemäße Transportfahrzeug arbeitet mit einer entsprechend ausgebildeten Übergabestation zusammen, so dass das Transportfahrzeug die zu befördernden Güter, welche auf der Übergabestation angeordnet sind, lediglich unterfährt, aus dieser Position aufnimmt und zu dem gewünschten Bereich befördert, um in einer dort angeordneten Übergabestation wiederum abgesetzt zu werden. Folglich ist das erfindungsgemäße System zum Transport ausgesprochen flexibel, arm an Störquellen, schnell und einfach in Betrieb zu setzen. Die Übergabestationen können je nach Bedarf starr oder flexible ausgebildet sein.

Gemäß einer bevorzugten Ausführungsform kann vorgesehen sein, dass das wenigstens eine Transportfahrzeug frei beweglich fahrbar ist. Das heißt, es handelt sich bei dem erfindungsgemäßen Transportfahrzeug nicht um ein schienengebundenes Fahrzeug, sondern das Fahrzeug kann völlig unabhängig an Stellen des Hochregallagers zur Übergabe oder Übernahme von Gütem bzw. zwischen dem Wareneingang und dem Warenausgang sowie dem Hochregallager befördert werden. Hierdurch wird eine hohe Flexibilität erzielt, da das Fahrzeug je nach Bedarf frei gesteuert werden kann, wobei z.B. auf Fahrtwegänderungen umgehend reagiert werden kann.

Gemäß einer weiteren bevorzugten Ausführungsform kann das wenigstens eine Transportfahrzeug femsteuerbar sein. Auch hierdurch wird eine besonders hohe Flexibilität erzielt, da das Transportfahrzeug direkt an die gewünschte Position befördert werden kann, ohne dass der Operator direkt in dem Bereich des Hochregallagers stationiert sein muss. Die Fernsteuerung ermöglicht es hierbei aktuell immer die kürzestmöglichen Wege auszuwählen, so dass die Beförderung wiederum zeitoptimiert erfolgen kann.

Gemäß einer weiteren bevorzugten Ausführungsform ist vorgesehen, dass das System durch ein übergelagertes Steuerungssystem steuer- und verwaltbar ist. Ein entsprechendes System ermöglicht eine automatisierte Beförderung der einzelnen Transportfahrzeuge, die sich insbesondere dann vorteilhaft erweisen, wenn mehrere Transportfahrzeuge gleichzeitig gesteuert und werden. Ein entsprechendes Steuerungssystem kann hierbei so ausgebildet sein, dass nicht nur die Transportfahrzeuge, insbesondere deren Bewegungs- und/oder Positionsdaten erfasst werden, sondern gleichzeitig auch Funktionen wie Einlagerung und/oder Rücklagern, Lagern und/oder Zwischenpuffern, Auslagern und/oder Bereitstellen der Gesamtanlage koordiniert und gesteuert werden.

Ferner kann vorgesehen sein, dass das wenigstens eine Transportfahrzeug eine kapazitive Energieversorgung aufweist. Hierdurch können Kosten zur Sicherstellung der Spannungsversorgung gespart werden, gleichzeitig ist es möglich, Platz und Gewicht einzusparen, die sonst z.B. durch Bereitstellen einer Zweitbatterie in einem Fahrzeug notwendig sind. Als kapazitive Energieversorgung sind hier beispielsweise Kondensatoren geeignet. Ferner können Batterien mit oder ohne Kurzladezyklen eingesetzt werden, die nicht stets volle Ladezyklen benötigen, sondern auch bei schwankenden Leistungsanforderungen an vom Fahrzeug anfahrbaren Ladezonen zwischengeladen werden können und nur in Zyklen von z.B. einer Woche einen vollen Ladezyklus benötigen. Der zeitliche Ausfall von Fahrzeugen für den Ladevorgang bzw. das Vorhalten von Zweitbatterien kann so stark reduziert werden.

Vorteilhafterweise kann das Transportfahrzeug erfindungsgemäß eine zweidimensionale Navigation aufweisen. Eine entsprechende zweidimensionale Navigation ermöglicht eine ausreichend genaue Steuerung der einzelnen Transportfahrzeuge zwischen den beabsichtigten Bereichen.

Gemäß einer anderen bevorzugten Ausführungsform kann die Übergabestation mit einer Einfahröffnung ausgebildet sein. Diese Einfahröffnung ist eine sehr einfache Ausgestaltung der Übergabestation um sicherzustellen, dass die von der Übergabestation mittels der Hubeinrichtung von dem Transportfahrzeug übernommenen Ladehilfsmittel mit Ladung auch von der Übergabestation wegbewegt werden können, ohne dass die Übergabestation entfernt werden muss.

Vorteilhafterweise kann die Übergabestation hierbei U-förmig oder in der Form zweier gegenüberliegenden Schienen- oder Stegelemente ausgebildet sein. Hierbei umfassen Stegelemente auch Bügelelemente, die beispielsweise L- oder T-förmig ausgebildet sind. Beide voran angegebenen Formen der Übergabestation haben sich im Betrieb als besonders geeignet erwiesen.

Gemäß einer anderen bevorzugten Ausführungsform kann die Übergabestation nicht angetriebene Fördermittel aufweisen. Eine entsprechende Übergabestation ist hierbei in der Regel starr an ihrer festen Position ausgebildet. Die Bereitstellung von nicht angetriebenen Förderelementen im Bereich der Übergabestation ermöglichen es z.B., die Ladehilfsmittel mit Ladung aus anderen Bereichen auf die nicht angetriebenen Förderelemente, z.B. Röllchenförderer, Schwerkraftrollenbahnen oder nicht angetriebene Förderketten, abzustellen oder auf diese aufzuschieben, und somit den Transportfahrzeugen dann zugänglich zu machen. Da hier keine angetriebenen Förderelemente eingesetzt werden, können Fehlerquellen insbesondere durch Störungen in diesem Bereich ausgeschlossen werden. Ferner kann eine gezielte Beladung beim Warenausgang erfolgen, die die einzelnen Ladehilfsmittel mit Gütern nicht der Reihe nach, sondern gemäß der gewünschten Verladungsabfolge durchgeführt werden kann.

Gemäß einer weiteren bevorzugten Ausführungsform kann die Übergabestation im Bereich des Hochregallagers von mindestens einem Kragarm des Hochregallagers gebildet werden oder aber U-förmig oder in der Form zweier gegenüberliegenden Schienen- oder Stegelemente. Der Kragarm wird hierbei von dem Stahlbau des Hochregallagers gebildet. Eine entsprechende Übergabestation stellt sicher, dass die Ladehilfsmittel mit Ladung auf beiden Seiten des Hochregallagers abgestellt werden können. Da das Transportfahrzeug in einem vor Personenzutritt abgesicherten Bereich bewegt wird, kann hierdurch eine optimale Beladung des Hochregallagers automatisiert und dies auch ohne herkömmliche oder schienengebundene Förderer gesichert werden.

Die vorliegende Erfindung kann vorteilhafterweise vorsehen, dass das wenigstens eine Transportfahrzeug die Güter zwischen Wareneingang aus Anlieferung oder Produktion und Hochregallager bewegt und/oder ein Transportfahrzeug die Güter zwischen Wareneingang durch Anlieferung oder Produktion und Hochregallager und Versand bewegt. Folglich kann die komplette Beförderung der Produkte zwischen Wareneingang und Warenausgang, wie auch zwischen Wareneingang, Hochregallager und Warenausgang von den Transportfahrzeugen übernommen werden. Hierbei können Transportfahrzeuge die eingegangenen Produkte, insbesondere Roh- und Hilfsstoffe zunächst an die Produktion übergeben, dort hergestellte Produkte bzw. Halbprodukte in dem Hochregallager zwischenlagern und wahlweise entweder der Produktion zurückführen oder dem Warenausgang übergeben. Das erfindungsgemäße System deckt somit den kompletten Bereich zwischen Wareneingang, Produktion, Hochregallager und Warenausgang ab, so dass die bisher vorhandenen Fehlerquellen, insbesondere im Bereich der Übergabe zwischen einzelnen Förderelementen, ausgeschlossen werden können. Folglich kann der Transport und die Lagerung mit höherer Verfügbarkeit, zeiteffektiver und damit kostengünstiger durchgeführt werden.

Ferner kann vorgesehen sein, dass die Übergabestation im Bereich des Warenausgangs solchermaßen ausgebildet ist, dass die Ladehilfsmittel mit Ladung zwischengepuffert werden können, und durch eingesetzte Querverschiebewägen in der richtigen Sequenz weiterbefördert werden. Der Mechanismus der Sequenzierung erlaubt für Ladehilfsmittel mit Ladung eine späte Festlegung der Versandreihenfolge, ein Überholen von Paletten und auch eine durchsatzoptimale Nutzung der Regalbediengeräte für die Auslagerung aus Hochregallagerbereichen.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen daher grundsätzlich gleiche Bezugszeichen auf und werden teilweise nicht mehrfach erläutert.
Fig. 1 zeigt eine schematische Darstellung eines erfindungsgemäßen Transportsystems mit Übergabestation, diese teilweise in perspektivischer Ansicht, und die einzelnen Schritte der Übergabe des Ladehilfsmittels mit Ladung von der Übergabestation an das Transportfahrzeug.
Fig. 2 zeigt in schematischer Seitenansicht ein beladenes Transportfahrzeug sowie eine Übergabestation im Bereich des Warenausgangs, welche auch als Zwischenpuffer ausgebildet ist.
Fig. 3 zeigt schematisch die einzelnen Stationen des Transportsystems.
Fig. 4 zeigt schematisch die Versandbereitstellung ohne/mit Sequenzierung gemäß drei verschiedener bevorzugter Ausführungsformen.

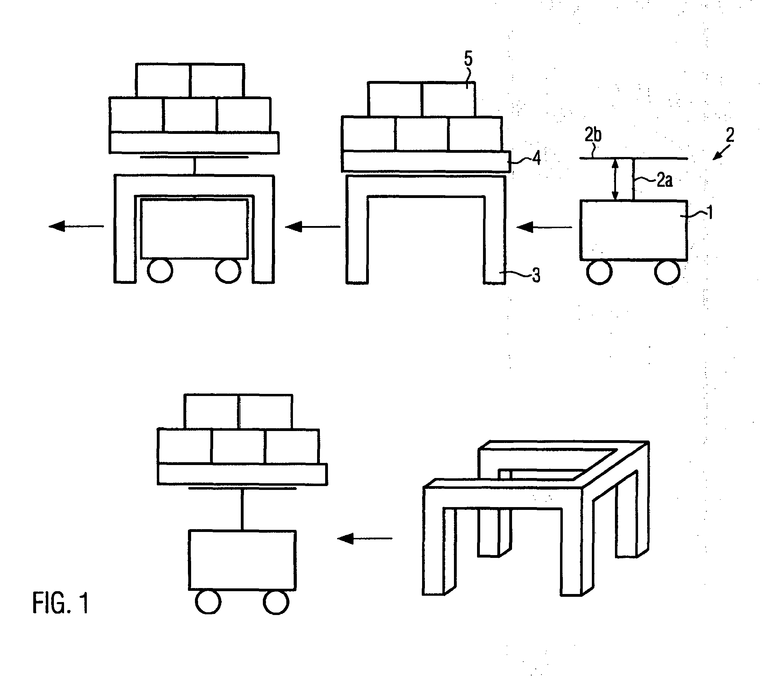

Die schematischen Darstellungen der Fig. 1 bis 4 zeigen verschiedene Ansichten eines Ausführbeispiels eines erfindungsgemäßen Transportsystems.

Dabei zeigt Fig. 1 die Beladung eines Transportfahrzeugs 1 an eine Übergabestation 3. Bei dem Transportfahrzeug 1 handelt es sich um ein fahrerloses Transportfahrzeug in kompakter Bauweise, d.h. es ist vorzugsweise bodennah ausgebildet. An der Oberseite des Transportfahrzeuges 1 ist eine Hubeinrichtung 2 angeordnet. Die Hubeinrichtung 2 umfasst ein Verstellelement 2a sowie ein Tragelement 2b, welches über das Verstellelement 2a in vertikaler Richtung angehoben oder abgesenkt werden kann. In seiner Ruheposition ist das Tragelement 2b vorzugsweise möglichst nahe an der Oberfläche des Transportfahrzeugs 1 angeordnet, um die kompakte Bauweise zu unterstützen, insbesondere wenn das Transportfahrzeug in einer Ruheposition ist. Das Transportfahrzeug ist hier frei beweglich ausgebildet, d.h. mittels der an der Unterseite angeordneten Räder oder auch endlos umlaufenden Bändern oder Ketten kann das Fahrzeug beliebig bewegt werden, wobei die Bewegung entweder durch Computersteuerung oder Fernsteuerung erfolgen kann. Es findet keine zusätzliche Leitung des Transportfahrzeugs mittels Schienen statt.

Im Betrieb wird das Transportfahrzeug mit abgesenktem Hubelement 2 unter eine Übergabestation 3 gefahren, auf welcher Paletten, d.h. Ladehilfsmittel 4, mit darauf angeordneten Gütern 5 abgelagert sind. Die Übergabestation ist ausreichend hoch ausgebildet um das Unterfahren durch das Transportfahrzeug 1 zu gewährleisten d.h. die Höhe des Transportfahrzeuges 1 samt abgesenktem Hubelement ist geringer als der Abstand der Unterseite der Übergangsstation zum Boden. Die Übergabestation 3 ist vorzugsweise als Gestell ausgebildet, auf welchem das Ladehilfsmittel 4 mit Ladung, das heißt Paletten, getragen werden. Im Detail ist das Gestell der Übergabestation 3, wie in Fig. 1 perspektivisch dargestellt, U-förmig ausgebildet, so dass an einer Seite eine Einfahröffnung bzw. Ausfahröffnung bereitgestellt ist. Die Palette liegt folglich lediglich auf drei Gestellelementen auf. So wäre für das Transportfahrzeug lediglich ein Unterfahren des Niveaus der Palettenunterseite notwendig.

Die U-förmige Ausbildung des Gestells ist lediglich eine bevorzugte Ausführungsform. Für viele Anwendungen kann es sich jedoch auch als vorteilhaft erweisen, wenn das Gestell aus zwei parallel ausgerichteten tragenden Bügeln bzw. Rahmen, d.h. aus zwei Gestellelementen besteht. Diese Bügel können gleichermaßen als L- oder T-Bügel ausgebildet sein. Vorteilhaft bei diesen Ausführungsformen ist, dass die Gestellte durchfahren werden können, da zwei gegenüberliegende Ein- bzw. Ausfahröffnungen existieren.

Nach Unterfahren der Übergangsstation 3 mit dem Transportfahrzeug wird das Transportfahrzeug 1 an einer Position unterhalb der Übergangsstation 3 sowie unterhalb des Ladehilfsmittels mit Ladung angehalten und das Hubelement 2 ausgefahren, bis das Tragelement 2b an der Unterseite des Ladehilfsmittels mit Ladung 4 anliegt. Ein weiteres Anheben des Hubelementes hebt das Ladehilfsmittel 4 nebst Ladung von der Übergangsstation 3 ab, so dass das gesamte Gewicht des Ladehilfsmittels 4 und der Ladung 5 ausschließlich von dem Transportfahrzeug getragen wird. In dieser Position befindet sich die Tragplatte 2b samt dem Ladehilfsmittel mit Ladung oberhalb der Übergabestation. Anschließend setzt sich das Transportfahrzeug 1 wieder in Bewegung und verlässt nunmehr die Übergabestation 3 durch die Ausfuhröffnung. Da hier das Gestell der Übergabestation unterbrochen ist, wird die Bewegung des Transportfahrzeuges nicht behindert.

Obwohl in dieser Darstellung nur mit einem einzelnen Verstellelement 2a dargestellt, kann das Hubelement auch auf beliebige andere Art und Weise ausgebildet sein, solange ein Anheben der Tragplatte 2b ermöglicht wird. Das Transportfahrzeug mit dem darauf angeordneten Ladehilfsmittel 4 nebst Gütern 5 wird dann frei zwischen der Übergabestation 3 und dem Hochregallager bzw. im Hochregallager navigiert, bis eine gewünschte Absetzvorrichtung bzw. Übergabestation 3 im Bereich des Hochregallagers erreicht wird, auf welchem das Ladehilfsmittel dann in umgekehrter Reihenfolge absetzbar ist. Das heißt, das Transportfahrzeug 1 fährt an einer Einfahröffnung entsprechend der Ausfahröffnung in die Übergabestation ein, senkt das Hubelement 2 ab bis das Ladehilfsmittel auf der Übergabestation 3 zu liegen kommt und nunmehr von der Übergabestation getragen wird.

Ein weiteres Absenken des Hubelementes schafft einen ausreichenden Abstand zu der Unterseite des Ladehilfsmittels mit Ladung, wie auch zu der Übergabestation, so dass das Transportfahrzeug, je nach Bedarf wegfahren kann. Hierbei kann das Transportfahrzeug die Übergabestation je nach physischer Ausprägung in beliebiger, möglicher Richtung verlassen und ist nicht mehr an die Einfahr-/Ausfahröffnung gebunden.

Die Übergabevorrichtungen im Bereich des Hochregallagers werden vorzugsweise durch Kragarme befestigt am Stahlbau des Hochregallagers ausgebildet. Insbesondere werden die Übergabestationen an einem oder auch beiden Enden einer Fahrgasse für Regalbediengeräte und dabei an beiden oder auch nur einer Seite der Fahrgassen eingerichtet. Die Übergabestationen werden dann von sowohl von Transportfahrzeugen sowie von Regalbediengeräten angefahren und Paletten, d.h. Ladehilfsmittel mit Gütern abgeholt oder bereitgestellt.

Da die Kragarmplätze in Hochregallagern einfach als Randplätze angebaut werden können, ist es möglich, bestehende Hochregallager einfach umzubauen. Die Kragarme können auch auf dem Bodenniveau angebracht werden und Übergabestation zu den Regalbediengeräten sein.

Hierdurch kann die Fördertechnik komplett entfallen und das Transportsystem kann den Zugangsweg anstelle der nicht vorhandenen Fördertechnik nutzen.

Für ein Hochregallager können zur Einlagerung oder auch Auslagerung auch Lagerplätze als Übergabestationen ausgeführt werden, sofern diese in Ebenen und Regalreihen vorgesehen werden, die sowohl von Regalbediengeräten als auch von Transportfahrzeugen angefahren werden können.

Im Bereich des Hochregallagers ist die Übergabestation ferner an dem Regalbediengerät angeordnet, so dass die Ladehilfsmittel mit Beladung von der Übergabestation vorzugsweise mit einer Teleskopgabel von der Übergabestation auf Stellplätze des Regalstahlbaus umgelagert werden können.

Gleichermaßen werden bei Entnahme von Gütern aus dem Hochregallager die gewünschten Produkte auf Ladehilfsmitteln aus dem Regalstahlbau mittels des Regalbediengerätes auf eine Übergabestation umgesetzt, von welcher aus das Ladehilfsmittel wieder von einem Transportfahrzeug übernommen wird. Das Transportfahrzeug wird nunmehr in Richtung des Warenausgangs gesteuert und dort auf einer entsprechenden Übergabestation wieder abgesetzt.

Hierbei kann auf dem Weg zum Warenausgang auch eine Zwischenpufferung der Ladehilfsmittel mit Ladung mittels statischer Übergabestationen erfolgen und kann projektbezogen optional mit beliebiger am Markt verfügbarer Förder- oder Puffertechnik verbunden werden. Durch die Pufferung kann eine Auslagerung aus dem Hochregallager mit hoher, ideal mit maximaler Leistung erfolgen, mit dem Nachteil, dass die Reihenfolge der ausgelagerten Paletten nicht immer einer final geforderten Verladesequenz entspricht. Mittels der Pufferung und direktem Zugriff zu den benötigten Paletten kann jedoch die geforderte Verladesequenz hergestellt werden.

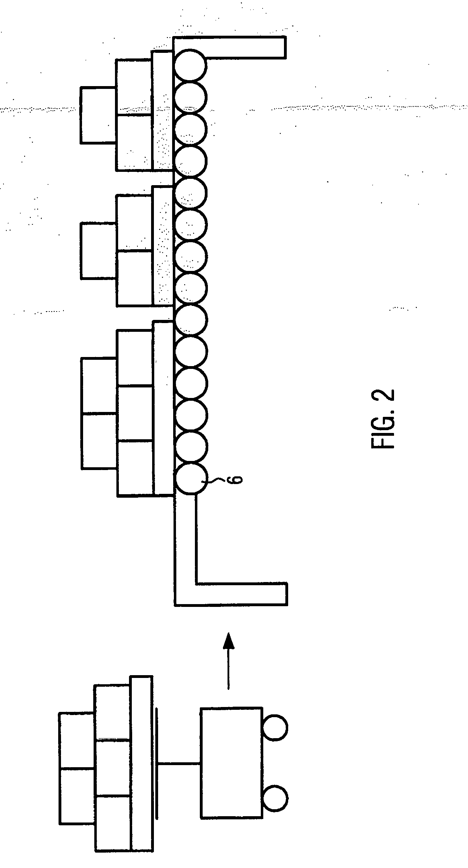

Darüber hinaus gibt es mit der Versandbereitstellung einer weitere Art der Pufferung, wobei diese üblicherweise für die Heckverladung mit Einhaltung einer Verladesequenz auf Gefällerollenbahnen oder aktiv angetrieben Stauförderern erfolgt. Eine solche Übergabestation im Bereich des Warenausgangs ist in Fig. 2 dargestellt, wobei die Übergabestation teilweise mit nicht angetriebenen Förderelementen ausgebildet ist, hier Rollenelemente 6, die ein weiteres Verschieben der Ladehilfsmittel in dem Bereich der nicht angetriebenen Förderelemente ermöglichen. Die Entnahme hin zum LKW erfolgt üblicherweise durch Handhubwagen oder Elektroameisen. Für eine Seitenverladung von LKW's werden die Paletten direkt von Übergabestationen mit Stapler entnommen, die diese unter seitlicher Anfahrt auf den LKW verladen.

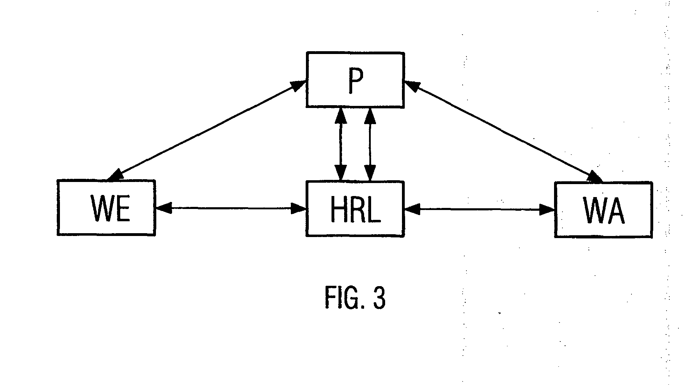

Fig. 3 zeigt schematisch die einzelnen Bereiche, in welchen das erfindungsgemäße Transportsystem einsetzbar ist. Zunächst werden auf Ladehilfsmitteln angeordnete Produkte in einem Wareneingang von den Übergabestationen 3 auf die Transportfahrzeuge übergeben. Bei den Produkten kann es sich um Roh-, Hilfs- und Betriebsstoffe, wie auch um fertige Produkte handeln. Von dem Wareneingang können die Produkte entweder direkt in die Produktion gefahren werden, oder in einem Hochregallager zwischengelagert werden. Findet eine Zwischenlagerung statt, erfolgt eine Übergabe an das Regallager und zu einem späteren Zeitpunkt eine Übergabe aus dem Regallager z.B. in Richtung der Produktion. Von der Produktion aus werden die hier gefertigten Produkte oder Halbprodukte entweder direkt an den Warenausgang übergeben, oder wiederum im Hochregallager zwischengelagert. Jede der Transportstrecken wird hierbei über die fahrerlosen Transportfahrzeuge überbrückt und kann projektbezogen um andere Förderer ergänzt werden. Das komplette System wird durch ein überlagertes System gesteuert und verwaltet, wobei die Steuerung sowohl in einer Kopfsteuerung, basierend auf einer Speicherprogrammierbaren Steuerung (SPS bzw. Smart SPS) oder in einer Materialflusssteuerung auf einem Computer realisiert wird. Die Übergabe der einzelnen Paletten kann durch Leerpalettenüberprüfung, Entfernen von Transportsicherung, Etikettierung der Palettenkennzeichnung etc. unterstützt werden.

Im Bereich des Warenausgangs können die Ladehilfsmittel 4 mit Beladung von den Übergabevorrichtungen 2 im Warenausgang durch eingesetzte Querverschiebewägen in der richtigen Sequenz auf Gefällerollbahnen verteilt werden. Die Gefällerollbahnen sind vorzugsweise nicht angetrieben und dienen der Versandbereitstellung der Paletten.

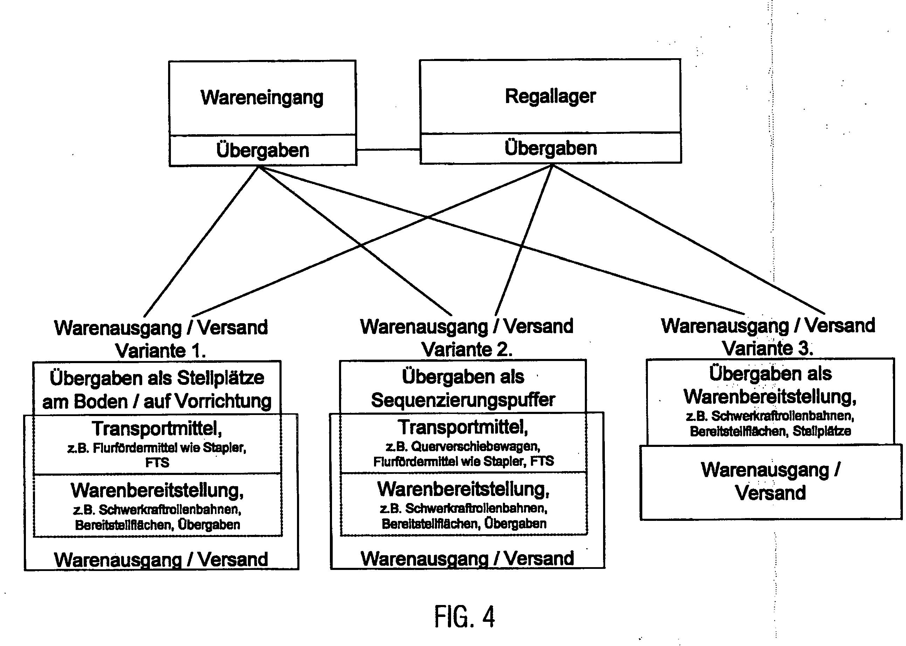

Einige verschiedene Ausführungsformen des Einsatzes des erfindungsgemäßen Transportsystems zwischen Wareneingang und Warenausgang sind im Detail in Bezug auf Fig. 4 beschrieben.

Durch die vorliegende Erfindung kann auf das komplette Gewerk Stetigfördertechnik im Bereich des Hochregallagers verzichtet werden und somit eine deutliche Investitionssparung erzielt werden.

In Fig. 4 ist schließlich schematisch die Versandbereitstellung mit oder ohne Sequenzierung gemäß dreier unterschiedlicher Ausführungsformen dargestellt. Hierbei sind jeweils die einzelnen Schritte der zu lagernden bzw. zu versendenden Güter beginnend mit dem Wareneingang bis zum Warenausgang bzw. Versand dargestellt. Werden eingegangene Güter zunächst in einem Hochregallager zwischengelagert, erfolgt eine Übergabe der Ladehilfsmittel samt darauf angeordneter Güter mittels der Transportfahrzeuge in ein Hochregallager und erst später die Weiterbeförderung aus dem Hochregallager in Richtung Versand.

Gemäß der ersten dargestellten Ausführungsform werden die Güter auf Ladehilfsmitteln angeordnet und diese Ladehilfsmittel nebst den Gütern von den erfindungsgemäßen Transportfahrzeugen befördert. Hier erfolgt zunächst eine Beförderung zu Stellplätzen auf Vorrichtungen, wobei die Vorrichtungen im Wesentlichen den Übergabestationen entsprechen können, d.h. von den Transportsystemen unterfahrbar sind, so dass die Ladehilfsmittel mit darauf angeordneten Gütern einfach abgestellt werden können, und jederzeit von dem Transportfahrzeug oder einem anderen weiter bewegt werden können. Von den gewählten Stellplätzen aus, werden die Ladehilfsmittel mit darauf angeordneten Gütern einfach über Transportmittel, wie Gabelstapler oder die erfindungsgemäßen Transportfahrzeuge weiterbefördert, entweder, um mittels eines Gabelstaplers beispielsweise von der Seite oder vom Heck her in Lastwagen verladen zu werden, oder um bis zu weiteren Übergabestationen befördert zu werden, die mit Schwerkraftrollbahnen verbunden sind, von denen aus ein Heckverladen der Güter, zumeist von Hand, beispielsweise über Handhubwagen oder Elektrohubwagen oder Gabelstapler, erfolgen kann. Die Ladehilfsmittel mit Ladung können jedoch auch direkt zu Übergabestationen befördert werden, die mit Schwerkraftrollbahnen verbunden sind.

Gemäß der zweiten dargestellten Ausführungsform werden die Güter auf Ladehilfsmitteln angeordnet und diese Ladehilfsmittel nebst den Gütern von den erfindungsgemäßenTransportfahrzeugen zu den gewählten Sequenzierplätzen befördert. Von dort aus können die Güter über Querverschiebewägen entnommen und auf Schwerkraftrollbahnen aufgesetzt werden, um sie darauf zur Verladung bereitzustellen. Wie bereits in Bezug auf die erste Ausführungsform erläutert, können hier Handhubwagen oder Elektrohubwagen oder Gabelstapler zur Heckverladung oder auch zur Seitenverladung eingesetzt werden.

Gemäß der dritten dargestellten Ausführungsform werden die Güter auf Ladehilfsmitteln angeordnet und diese Ladehilfsmittel nebst den Gütern von den erfindungsgemäßen Transportfahrzeugen an gewählte Übergabestellplätze im Bereich des Warenausgangs transportiert und zwischengelagert, wie auch direkt zu Übergabestationen befördert, die mit Rollenbahnen oder Schwerkraftrollbahnen zur Versandbereitstellung verbunden sind. Hierbei können, wie in Fig. 2 dargestellt, die Übergabestationen der Transportfahrzeuge mit Rollenbahnen ausgestattet sein, um so ein leichtes Weiterbefördern der einzelnen Güter zu ermöglichen.

Zusammenfassend bleibt festzuhalten, dass bei dem erfindungsgemäßen Transportsystem bereits bekannte Elemente wie Gabelstapler, Schwerkraftrollbahnen in Kombination mit den erfindungsgemäßen Transportfahrzeugen verwendet und eingesetzt werden, so dass ein sehr flexibles System erzielt wird, das die Abläufe zwischen Wareneingang und Warenausgang optimal gestaltet.

Zusätzlich kann, wie bereits beschrieben, bei der Heckverladung die Einhaltung der Verladesequenz auf den bereitgestellten Gefällerollbahnen oder durch aktiv angetriebene Stauförderer erfolgen. Die Entnahme zum LKW erfolgt üblicherweise durch Handhubwagen oder durch Elektroameisen. Bei der Seitenverladung von LKWs werden die Paletten direkt von der Übergabestation mit Staplern entnommen, die diese unter seitlicher Anfahrt auf den LKW verladen.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

## Patentansprüche

1. System zum Transport von auf Ladehilfsmitteln (4) angeordneten Gütern (5) zwischen zwei Bereichen, wobei ein Bereich ein Hochregallager ist, umfassend ein fahrerloses Transportsystem mit wenigstens einem Transportfahrzeug (1) zum Transport der Güter samt Ladehilfsmittel, wobei das Transportfahrzeug (1) mit einer Hubeinrichtung (2) ausgebildet ist, die oberhalb des Fahrzeuges (1) anhebbar und absenkbar ist, und mit einer vom Transportfahrzeug (2) unterfahrbaren Übergabestation (3) von der das Transportfahrzeug (1) dort abgesetzte Ladehilfsmittel (4) mit Ladung übernehmen und/oder übergeben kann.

2. System zum Transport von auf Ladehilfsmitteln (4) angeordneten Gütern (5) nach Anspruch 1, **dadurch gekennzeichnet, dass** das wenigstens eine Transportfahrzeug (1) frei beweglich fahrbar ist.

3. System zum Transport von auf Ladehilfsmitteln (4) angeordneten Gütern (5) nach Anspruch 1 oder 2, **dadurch gekennzeichnet, dass** das wenigstens eine Transportfahrzeug (1) fernsteuerbar ist.

4. System zum Transport von auf Ladehilfsmitteln (4) angeordneten Gütern (5) nach einem der Ansprüche 1 bis 3, **dadurch gekennzeichnet, dass** das System durch ein übergelagertes Steuerungssystem steuer- und verwaltbar ist

5. System zum Transport von auf Ladehilfsmitteln (4) angeordneten Gütern (5) nach einem der Ansprüche 1 bis 4, **dadurch gekennzeichnet, dass** das wenigstens eine Transportfahrzeug (1) eine kapazitive Energieversorgung oder, dass das wenigstens eine Transportfahrzeug (1) eine Batterie mit oder ohne Kurzladezyklen aufweist.

6. System zum Transport von auf Ladehilfsmitteln (4) angeordneten Gütern (5) nach einem der Ansprüche 1 bis 5, **dadurch gekennzeichnet, dass** das wenigstens eine Transportfahrzeug (1) eine zweidimensionale Navigation aufweist.

7. System zum Transport von auf Ladehilfsmitteln (4) angeordneten Gütern (5) nach einem der Ansprüche 1 bis 6, **dadurch gekennzeichnet, dass** die Übergabestation (3) ortsfest ausgebildet ist.

8. System zum Transport von auf Ladehilfsmitteln (4) angeordneten Gütern (5) nach einem der Ansprüche 1 bis 7, **dadurch gekennzeichnet, dass** die Übergabestation (3) mit wenigstens einer Einfahröffnung ausgebildet ist.

9. System zum Transport von auf Ladehilfsmitteln (4) angeordneten Gütern (5) nach einem der Ansprüche 1 bis 8, **dadurch gekennzeichnet, dass** die Übergabestation (3) U-förmig oder in der Form zweier gegenüberliegenden Schienen- oder Stegelemente ausgebildet ist.

10. System zum Transport von auf Ladehilfsmitteln (4) angeordneten Gütern (5) nach einem der Ansprüche 8 bis 9, **dadurch gekennzeichnet, dass** die Übergabestation (3) nicht angetriebene Fördermittel aufweist.

11. System zum Transport von auf Ladehilfsmitteln (4) angeordneten Gütern (5) nach einem der Ansprüche 1 bis 10, **dadurch gekennzeichnet, dass** die Übergabestation (3) im Bereich des Hochregallagers von mindestens einem Kragarm des Hochregallagers gebildet wird.

12. System zum Transport von auf Ladehilfsmitteln (4) angeordneten Gütern (5) nach einem der Ansprüche 1 bis 11, **dadurch gekennzeichnet, dass** das wenigstens eine Transportfahrzeug die Güter (5), insbesondere Roh-, Hilfs- und Betriebsstoffe, zwischen Wareneingang aus Anlieferung oder Produktion und Hochregallager bewegt und/oder wenigstens ein weiteres Transportfahrzeug (1) die Güter zwischen Wareneingang durch Anlieferung oder Produktion, Hochregallager und Warenausgang bzw. Versand bewegt.

13. System zum Transport von auf Ladehilfsmitteln (4) angeordneten Gütern (5) nach Anspruch 11, **dadurch gekennzeichnet, dass** die Übergabestation (3) im Bereich des Warenausgangs Schwerkraftrollenbahnen zur Versandbereitstellung anbindet.

14. System zum Transport von auf Ladehilfsmitteln (4) angeordneten Gütern (5) nach Anspruch 11, **dadurch gekennzeichnet, dass** die Übergabestation (3) im Bereich des Warenausgangs die Ladehilfsmittel (4) mit Gütern (5) zwischenpuffert.

15. System zum Transport von auf Ladehilfsmitteln (4) angeordneten Gütern (5) nach Anspruch 14, **dadurch gekennzeichnet, dass** im Bereich des Warenausgangs zwischengepufferte Ladehilfsmittel (4) mit Gütern (5) von einem weiteren Förderer auf Schwerkraftrollenbahnen zur Versandbereitstellung verteilt werden.

16. System zum Transport von auf Ladehilfsmitteln (4) angeordneten Gütern (5) nach einem der Ansprüche 13 bis 15, **dadurch gekennzeichnet, dass** die Ladehilfsmittel (5) mit Gütern (5) von den Schwerkraftrollbahnen mittels Hubwagen oder Elektroameisen auf Lastwagen verladen werden.

17. System zum Transport von auf Ladehilfsmitteln (4) angeordneten Gütern (5) nach einem der Ansprüche 12 bis 16, **dadurch gekennzeichnet, dass** zusätzlich von den Transportfahrzeugen (1) ansteuerbare Stellplätze zur Zwischenlagerung der Ladehilfsmittel (4) mit Gütern (5) bereitgestellt sind, von denen die Ladehilfsmittel mit Gütern (5) über Transportfahrzeuge (1) oder Gabelstapler gemäß einer vorbestimmten Abfolge weiterbefördert werden.

## Claims

1. System for transporting goods (5) arranged on loading devices (4) between two areas, one area being a high-bay warehouse, comprising a driverless transport system with at least one transport trolley (1) for transporting the goods together with the loading devices, the transport trolley (1) being designed with a lifting device (2) which can be lifted and lowered above the trolley (1), and with a transfer station (3) under which the transport trolley (1) can drive and from which the transport trolley (1) can accept and/or transfer loading devices (4) with load deposited there.

2. System for transporting goods (5) arranged on loading devices (4) according to claim 1, **characterized in that** the at least one transport trolley (1) can be driven freely movably.

3. System for transporting goods (5) arranged on loading devices (4) according to claim 1 or 2, **characterized in that** the at least one transport trolley (1) is remote-controlled.

4. System for transporting goods (5) arranged on loading devices (4) according to one of claims 1 to 3, **characterized in that** the system can be controlled and administered by a superimposed control system.

5. System for transporting goods (5) arranged on loading devices (4) according to one of claims 1 to 4, **characterized in that** the at least one transport trolley (1) comprises a capacitive power supply, or that the at least one transport trolley (1) comprises a battery with or without short charge cycles.

6. System for transporting goods (5) arranged on loading devices (4) according to one of claims 1 to 5, **characterized in that** the at least one transport trolley (1) has a two-dimensional navigation.

7. System for transporting goods (5) arranged on loading devices (4) according to one of claims 1 to 6, **characterized in that** the transfer station (3) is designed to be stationary.

8. System for transporting goods (5) arranged on loading devices (4) according to one of claims 1 to 7, **characterized in that** the transfer station (3) is designed with at least one entry opening.

9. System for transporting goods (5) arranged on loading devices (4) according to one of claims 1 to 8, **characterized in that** the transfer station (3) is embodied in a U-shape or in the form of two opposite rail or web elements.

10. System for transporting goods (5) arranged on loading devices (4) according to one of claims 8 to 9, **characterized in that** the transfer station (3) comprises non-driven conveyor means.

11. System for transporting goods (5) arranged on loading devices (4) according to one of claims 1 to 10, **characterized in that** the transfer station (3) is formed in the region of the high-bay warehouse by at least one cantilever arm of the high-bay warehouse.

12. System for transporting goods (5) arranged on loading devices (4) according to one of claims 1 to 11, **characterized in that** the at least one transport trolley moves the goods (5), in particular raw and operating materials, between the incoming goods from delivery or production and the high-bay warehouse, and/or at least one further transport trolley (1) moves the goods between the incoming goods through delivery or production, high-bay warehouse and outgoing goods or shipping, respectively.

13. System for transporting goods (5) arranged on loading devices (4) according to claim 11, **characterized in that** the transfer station (3) is linked to gravity roller conveyors for the preparation for shipping in the region of the outgoing goods.

14. System for transporting goods (5) arranged on loading devices (4) according to claim 11, **characterized in that** the transfer station (3) temporarily buffers the loading devices (4) with goods in the region of the outgoing goods (5).

15. System for transporting goods (5) arranged on loading devices (4) according to claim 14, **characterized in that** in the region of the outgoing goods, temporarily buffered loading devices (4) with goods (5) are distributed onto gravity roller conveyors for their preparation for shipping by a further conveyor.

16. System for transporting goods (5) arranged on loading devices (4) according to one of claims 13 to 15, **characterized in that** the loading devices (4) with goods (5) are loaded from the gravity roller conveyors onto trucks by means of elevating trucks or electric pallet stackers.

17. System for transporting goods (5) arranged on loading devices (4) according to one of claims 12 to 16, **characterized in that** storing positions for temporarily storing the loading devices with goods (5) to which the transport trolleys (1) can drive are additionally provided, where the loading devices (4) with goods (5) are transported further from these spaces via transport trolleys (1) or fork lifts according to a predetermined sequence.

## Revendications

1. Système pour le transport de marchandises (5) agencées sur des moyens auxiliaires de chargement (4), entre deux zones, l'une des zones étant un entrepôt à rayonnages de stockage en hauteur, l'ensemble comprenant un système de transport sans conducteur avec au moins un véhicule de transport (1) pour transporter les marchandises, y compris les moyens auxiliaires de chargement, le véhicule de transport (1) étant conçu avec un dispositif de levage (2), qui peut être soulevé et abaissé au-dessus du véhicule (1), et l'ensemble comprenant également un poste de transfert (3) sous lequel peut venir circuler le véhicule de transport (1), et duquel le véhicule de transport (1) peut prélever et/ou auquel il peut transférer des moyens auxiliaires de chargement (4) avec leur chargement, qui sont déposés dans le poste de transfert.

2. Système pour le transport de marchandises (5) agencées sur des moyens auxiliaires de chargement (4), selon la revendication 1, **caractérisé en ce que** ledit au moins un véhicule de transport (1) peut circuler de manière librement mobile.

3. Système pour le transport de marchandises (5) agencées sur des moyens auxiliaires de chargement (4), selon la revendication 1 ou la revendication 2, **caractérisé en ce que** ledit au moins un véhicule de transport (1) peut être télécommandé à distance.

4. Système pour le transport de marchandises (5) agencées sur des moyens auxiliaires de chargement (4), selon l'une des revendications 1 à 3, **caractérisé en ce que** le système peut être commandé et géré par un système de commande superviseur.

5. Système pour le transport de marchandises (5) agencées sur des moyens auxiliaires de chargement (4), selon l'une des revendications 1 à 4, **caractérisé en ce que** ledit au moins un véhicule de transport (1) comprend une alimentation en énergie, capacitive, ou **en ce que** ledit au moins un véhicule de transport (1) comprend une batterie avec ou sans cycles de charge courts.

6. Système pour le transport de marchandises (5) agencées sur des moyens auxiliaires de chargement (4), selon l'une des revendications 1 à 5, **caractérisé en ce que** ledit au moins un véhicule de transport (1) présente un système de navigation à deux dimensions.

7. Système pour le transport de marchandises (5) agencées sur des moyens auxiliaires de chargement (4), selon l'une des revendications 1 à 6, **caractérisé en ce que** le poste de transfert (3) est conçu pour être en position fixe.

8. Système pour le transport de marchandises (5) agencées sur des moyens auxiliaires de chargement (4), selon l'une des revendications 1 à 7, **caractérisé en ce que** le poste de transfert (3) est réalisé de manière à comporter au moins une ouverture d'entrée de circulation.

9. Système pour le transport de marchandises (5) agencées sur des moyens auxiliaires de chargement (4), selon l'une des revendications 1 à 8, **caractérisé en ce que** le poste de transfert (3) est réalisé en forme de U ou sous la forme de deux éléments de rails ou de deux éléments de branche.

10. Système pour le transport de marchandises (5) agencées sur des moyens auxiliaires de chargement (4), selon l'une des revendications 8 à 9, **caractérisé en ce que** le poste de transfert (3) comporte des moyens de transport non entraînés.

11. Système pour le transport de marchandises (5) agencées sur des moyens auxiliaires de chargement (4), selon l'une des revendications 1 à 10, **caractérisé en ce que** le poste de transfert (3) dans la zone de l'entrepôt à rayonnages de stockage en hauteur est formé par au moins un bras en porte-à-faux de l'entrepôt à rayonnages de stockage en hauteur.

12. Système pour le transport de marchandises (5) agencées sur des moyens auxiliaires de chargement (4), selon l'une des revendications 1 à 11, **caractérisé en ce que** ledit au moins un véhicule de transport déplace les marchandises (5), notamment des matières premières ou des produits de départ, des produits auxiliaires et des produits intrants ou consommables, entre une entrée de marchandises en provenance de livraisons ou de la production, et l'entrepôt à rayonnages de stockage en hauteur, et/ou au moins un autre véhicule de transport (1) déplace les marchandises entre l'entrée de marchandises par livraison ou production, l'entrepôt à rayonnages de stockage en hauteur, et la sortie de marchandises ou l'expédition.

13. Système pour le transport de marchandises (5) agencées sur des moyens auxiliaires de chargement (4), selon la revendication 11, **caractérisé en ce que** le poste de transfert (3), dans la région de la sortie des marchandises, se raccorde à des voies à rouleaux de transport par gravité, en vue de la mise à disposition pour l'expédition.

14. Système pour le transport de marchandises (5) agencées sur des moyens auxiliaires de chargement (4), selon la revendication 11, **caractérisé en ce que** le poste de transfert (3) assure dans la zone de la sortie des marchandises, un stockage tampon intermédiaire des moyens auxiliaires de chargement (4) avec leurs marchandises (5).

15. Système pour le transport de marchandises (5) agencées sur des moyens auxiliaires de chargement (4), selon la revendication 14, **caractérisé en ce que** des moyens auxiliaires de chargement (4) avec leurs marchandises (5), en stockage tampon intermédiaire dans la zone de la sortie des marchandises, sont réparties par un autre convoyeur ou transporteur sur des voies à rouleaux de transport par gravité, en vue de la mise à disposition pour l'expédition.

16. Système pour le transport de marchandises (5) agencées sur des moyens auxiliaires de chargement (4), selon l'une des revendications 13 à 15, **caractérisé en ce que** les moyens auxiliaires de chargement (4) avec leurs marchandises (5) sont chargés sur camions ou poids-lourds, à partir des voies à rouleaux de transport par gravité, à l'aide de chariots élévateurs ou de transpalettes électriques.

17. Système pour le transport de marchandises (5) agencées sur des moyens auxiliaires de chargement (4), selon l'une des revendications 12 à 16, **caractérisé en ce que** sont prévues en supplément, pour le stockage intermédiaire des moyens auxiliaires de chargement (4) avec leurs marchandises (5), des zones de dépôt qui peuvent être pilotées par les véhicules de transport (1) et à partir desquelles le transport des moyens auxiliaires de chargement avec leurs marchandises (5) est poursuivi par l'intermédiaire de véhicules de transport (1) ou de chariots élévateurs à fourche, conformément à une séquence ou un ordre prédéterminés.
